# EUROPÄISCHE PATENTSCHRIFT

(11) **EP 2 893 604 B1**
(45) Veröffentlichungstag und Bekanntmachung des Hinweises auf die Patenterteilung: **16.10.2019**
(21) Anmeldenummer: 13739702.2
(22) Anmeldetag: 22.07.2013
(51) Int. Cl.: H02H 7/125, H02H 3/02, H02M 1/36, H02P 3/18, H02P 3/22, B60L 3/04

(54) **BETRIEBSZUSTANDSSCHALTUNG FÜR WECHSELRICHTER UND VERFAHREN ZUM EINSTELLEN VON BETRIEBSZUSTÄNDEN EINES WECHSELRICHTERS**
OPERATING STATE CIRCUIT FOR AN INVERTER AND METHOD FOR SETTING OPERATING STATES OF AN INVERTER
CIRCUIT D'ÉTAT DE FONCTIONNEMENT D'UN ONDULEUR ET PROCÉDÉ DE RÉGLAGE DES ÉTATS DE FONCTIONNEMENT D'UN ONDULEUR

(30) Priorität: 10.09.2012 DE 102012216008
(43) Veröffentlichungstag der Anmeldung: 15.07.2015
(73) Patentinhaber: Robert Bosch GmbH, 70442 Stuttgart (DE)
(72) Erfinder: EBERLEIN, Edwin, 70197 Stuttgart (DE); SCHOENKNECHT, Andreas, 71272 Renningen (DE); RAICHLE, Daniel, 71665 Vaihingen (DE)
(86) Internationale Anmeldenummer: PCT/EP2013/065375
(87) Internationale Veröffentlichungsnummer: WO 2014/037143

(56) Entgegenhaltungen:
- EP-A1- 1 816 739
- DE-A1-102009 028 502

## Beschreibung

Die Erfindung betrifft eine Betriebszustandsschaltung für einen Wechselrichter und ein Verfahren zum Einstellen von Betriebszuständen eines Wechselrichters, insbesondere für einen Wechselrichter zur Versorgung einer Synchronmaschine.

### Stand der Technik

Elektrische Antriebe von Hybrid- oder Elektrofahrzeugen können permanent-erregte elektrische Maschinen, insbesondere Synchronmaschinen aufweisen, welche mittels eines Pulswechselrichters mit Wechselspannung versorgt werden. Dabei kann es bei Fehlerzuständen auf der Niedervoltseite, beispielsweise bei einem Ausfall der elektronischen Ansteuerung, der Energieversorgung, verschiedener Sensoren, der Datenkommunikation oder einer Sicherung, notwendig sein, im Wechselrichter einen sicheren Zustand einzustellen, das heißt einen Schaltzustand des Wechselrichters, in welchem die Sicherheit für auf das Fahrzeug zugreifende Personen, wie beispielsweise Rettungskräfte bei einem Unfall, und für die Integrität des elektrischen Systems gewährleistet bleibt.

Üblicherweise wird eine Steuereinrichtung des Wechselrichters durch das Niedervoltsystem des Fahrzeugs versorgt. Bei einem Ausfall der Niedervoltversorgung kann die Steuereinrichtung des Wechselrichters den Wechselrichter selbstständig in einen sicheren Zustand schalten, um eine mögliche Schädigung elektrischer Komponenten zu verhindern, beispielsweise durch einen unkontrollierten Energieeintrag in den Gleichspannungszwischenkreis, aus dem der Wechselrichter gespeist wird. Dabei können in herkömmlichen Verfahren verschiedene Schaltungszustände realisiert werden.

Beispielsweise können sämtliche mit dem niedrigen Potential verbundenen Schalter, sogenannte Low-Side-Schalter, geschlossen und alle mit dem hohen Potential verbundenen Schalter, sogenannte High-Side-Schalter, geöffnet werden. Diese Betriebsart wird auch als Kurzschlusszustand zu niedrigem Potential bezeichnet. Es können alternativ auch alle High-Side-Schalter geschlossen und alle Low-Side-Schalter geöffnet werden, so dass ein Kurzschlusszustand zu hohem Potential entsteht. Bei einem anderen Abschaltverfahren werden sämtliche Schalter des Pulswechselrichters geöffnet. Dies wird auch als Freilaufmodus bezeichnet.

Aus der Druckschrift DE 10 2006 003 254 A1 beispielsweise ist eine Kombination von Abschaltverfahren bekannt: Nachdem beispielsweise der Phasenstrom nach dem Umschalten in den Kurzschlusszustand noch kurze Zeit ansteigen kann, wird dort vorgeschlagen, beide bekannte Abschalt-Betriebsarten sequentiell zu nutzen und die elektrische Maschine zunächst in den Freilaufmodus und anschließend in den Kurzschlusszustand zu schalten.

Die Druckschrift DE 10 2009 047 616 A1 offenbart eine Wechselrichterschaltung für eine elektrische Maschine, welche im Fehlerfall von dem Betriebszustand eines aktiven Kurzschlusses in den Betriebszustand eines Freilaufs versetzt werden kann.

Die Druckschrift WO 2012/000710 A2 offenbart ein Verfahren zum Betrieb einer als Antriebsaggregat in einem Kraftfahrzeug dienenden mindestens dreiphasigen elektrischen Maschine, welche über einen Wechselrichter, insbesondere einen Pulswechselrichter, angesteuert wird, wobei der Wechselrichter Schaltelemente in Form von Halbbrücken umfasst und jeweils eine Halbbrücke elektrisch mit einer Phase der elektrischen Maschine verbunden ist. Ist ein erstes Schaltelement einer mit einer ersten Phase verbundenen ersten Halbbrücke ausfallbedingt dauerhaft geschlossen, so wird ein zweites Schaltelement der ersten Halbbrücke dauerhaft geöffnet und in einem ersten Winkelbereich einer elektrischen Umdrehung, welcher von der ersten Phase unbeeinflusst ist, werden sämtliche Schaltelemente der weiteren Halbbrücken in herkömmlicher Weise angesteuert.

In einem Kurzschlusszustand bildet sich ein Bremsmoment aus, welches durch den generatorischen Betrieb der Synchronmaschine erzeugt wird. Bei einem Abschleppen des Fahrzeugs beispielsweise ist dieses Bremsmoment hinderlich. Insbesondere bei geringen Drehzahlen ist das durch den Kurzschlusszustand bedingte Bremsmoment der elektrischen Maschine relativ groß. Die Druckschrift JP 60005791 A1 beispielsweise schlägt vor, zur Begrenzung des Bremsmoments einen in Abhängigkeit von der Zwischenkreisspannung ansteuerbaren Momentenbegrenzer einzusetzen, um ein Überladen des Zwischenkreiskondensators zu vermeiden.

Weiterhin beschreibt die Druckschrift EP 1 816 739 A1 ein Verfahren zur Regelung eines mehrphasigen, elektronisch kommutierten Motors. Die Druckschrift DE 10 2009 028 502 A1 offenbart ferner ein Verfahren zum Überwachen eines Antriebszustands eines Elektromotors.

Es besteht ein Bedarf an Lösungen für die Ansteuerung eines Wechselrichters in einem elektrischen Antriebssystem mit einer elektrischen Maschine, bei denen auch bei einem Ausfall der Niedervoltversorgung der Steuerung Betriebszustände des Wechselrichters in sicherer und effizienter Weise eingestellt werden können.

### Offenbarung der Erfindung

Die vorliegende Erfindung schafft gemäß einem Aspekt eine Betriebszustandsschaltung zum Ansteuern eines Wechselrichters mit jeweilige Schalteinrichtungen aufweisenden Halbbrücken, welcher eine n-phasige elektrische Maschine über den jeweiligen Halbbrücken zugeordnete Phasenanschlüsse mit einer n-phasigen Versorgungsspannung versorgt, wobei n ≥ 1. Die Betriebszustandsschaltung umfasst eine Auswerteeinrichtung, welche mit den Phasenanschlüssen des Wechselrichters verbunden ist, und welche dazu ausgelegt ist, Phasenströme an den Phasenanschlüssen des Wechselrichters zu erfassen, und eine Ansteuereinrichtung, welche mit der Auswerteeinrichtung gekoppelt ist, und welche dazu ausgelegt ist, den Wechselrichter von einem Kurzschlusszustand in einen Freilaufmodus zu schalten, wobei die Auswerteeinrichtung dazu ausgelegt ist, ein Freilauftriggersignal zu erzeugen und an die Ansteuereinrichtung auszugeben, und wobei die Ansteuereinrichtung dazu ausgelegt ist, die jeweiligen Schalteinrichtungen der Halbbrücken nach Empfang des Freilauftriggersignals erst dann in einen geöffneten Zustand zu versetzen, wenn der jeweilige erfasste Phasenstrom an dem zugeordneten Phasenanschluss einen Nulldurchgang oder eine von dem Wechselrichter in die elektrische Maschine hineinlaufende Stromrichtung aufweist. Die Betriebszustandsschaltung ist dadurch gekennzeichnet, dass die Auswerteeinrichtung mit gleichspannungsseitigen Eingangsanschlüssen des Wechselrichters verbunden ist, dass die Auswerteeinrichtung dazu ausgelegt ist, eine gleichspannungsseitige Eingangsspannung des Wechselrichters an den gleichspannungsseitigen Eingangsanschlüssen des Wechselrichters zu erfassen, dass die Ansteuereinrichtung dazu ausgelegt ist, den Wechselrichter in Abhängigkeit von der erfassten gleichspannungsseitigen Eingangsspannung von dem Kurzschlusszustand in den Freilaufmodus zu schalten, und dass die Auswerteeinrichtung dazu ausgelegt ist, das Freilauftriggersignal zu erzeugen und an die Ansteuereinrichtung auszugeben, wenn die erfasste gleichspannungsseitige Eingangsspannung geringer als ein einstellbarer Freilaufschwellwert ist.

Gemäß einem weiteren Aspekt schafft die Erfindung ein elektrisches Antriebssystem, mit einem Gleichspannungszwischenkreis, welcher dazu ausgelegt ist, von einer Hochspannungsquelle mit einer Gleichspannung versorgt zu werden, einem Wechselrichter mit jeweilige Schalteinrichtungen aufweisenden Halbbrücken, welcher mit dem Gleichspannungszwischenkreis verbunden ist, und welcher dazu ausgelegt, eine n-phasige Versorgungsspannung für eine n-phasige elektrische Maschine an n Phasenanschlüssen bereitzustellen, wobei n ≥ 1, und einer erfindungsgemäßen Betriebszustandsschaltung, welche dazu ausgelegt ist, die Vielzahl der Schalteinrichtungen des Wechselrichters zum Einstellen eines Freilaufzustands oder eines aktiven Kurzschlusses anzusteuern.

Gemäß einem weiteren Aspekt schafft die vorliegende Erfindung ein Verfahren zum Einstellen von Betriebszuständen eines Wechselrichters, welcher jeweilige Schalteinrichtungen aufweisende Halbbrücken umfasst und welcher eine n-phasige elektrische Maschine über den jeweiligen Halbbrücken zugeordnete Phasenanschlüsse mit einer n-phasigen Versorgungsspannung versorgt, wobei n ≥ 1. Das Verfahren umfasst die Schritte des Erfassens von Phasenströmen an den Phasenanschlüssen des Wechselrichters, des Erzeugens eines Freilauftriggersignals, und des Schaltens des Wechselrichters von einem Kurzschlusszustand in einen Freilaufmodus. Dabei werden die jeweiligen Schalteinrichtungen der Halbbrücken nach Empfang des Freilauftriggersignals erst dann in einen geöffneten Zustand versetzt, wenn der jeweilige erfasste Phasenstrom an dem zugeordneten Phasenanschluss einen Nulldurchgang oder eine von dem Wechselrichter in die elektrische Maschine hineinlaufende Stromrichtung aufweist. Das Verfahren ist dadurch gekennzeichnet, dass es ferner den Schritt des Erfassens einer gleichspannungsseitigen Eingangsspannung des Wechselrichters umfasst, dass das Erzeugen des Freilauftriggersignals erfolgt, wenn die erfasste gleichspannungsseitige Eingangsspannung geringer als ein einstellbarer Freilaufschwellwert ist, und dass das Schalten des Wechselrichters von dem Kurzschlusszustand in den Freilaufmodus in Abhängigkeit von der erfassten gleichspannungsseitigen Eingangsspannung erfolgt.

### Vorteile der Erfindung

Eine Idee ist es, bei einem Wechsel des Betriebszustands eines Wechselrichter einer elektrischen Maschine, insbesondere einer Synchronmaschine, von einem aktiven Kurzschlusszustand in einen Freilaufmodus die momentanen Phasenströme in dem Wechselrichter zu überwachen und die Halbbrücken des Wechselrichters individuell und separat voneinander anzusteuern. So werden eine oder mehrere der Schalteinrichtungen einer Halbbrücke erst dann von einem leitenden in einen sperrenden Zustand überführt, wenn der Phasenstrom einen Nulldurchgang aufweist oder zum Zeitpunkt des Betriebszustandswechsels der Phasenstrom von dem Wechselrichter in die elektrische Maschine fließt.

Ein Vorteil dieser Vorgehensweise ist es, dass kein Energieeintrag in den Gleichspannungszwischenkreis erfolgt, so dass der Freilaufmodus länger beibehalten werden kann. Da im Freilaufmodus kein Bremsmoment auftritt, kann beispielsweise bei einem Auftreten einer Fehlfunktion während der Fahrt mit einem elektrisch betriebenen Fahrzeug ein sanfteres Ausrollen erfolgen. Zudem wird die für ein Abschleppen eines elektrisch betriebenen Fahrzeugs benötigte Leistung reduziert. In einigen Fehlerfällen, beispielsweise bei einem Ausfall der Niedervoltversorgung, bei einem Ausfall der niedervoltseitigen Lageerfassung des Polrads der elektrischen Maschine, bei einem Ausfall sonstiger niedervoltseitiger elektronischer Steuerkomponenten oder sonstigen niedervoltseitigen Fehlfunktionen, kann das elektrisch betriebenen Fahrzeug geschoben werden, ohne das Bremsmoment der elektrischen Maschine im aktiven Kurzschlusszustand überwinden zu müssen.

Vorteilhafterweise wird eine Belastung oder thermische Überlastung des Wechselrichters in dem aktiven Kurzschlusszustand vermieden, da im Freilaufmodus keine Kurzschlussströme auftreten. Dies ist insbesondere dann vorteilhaft, wenn aufgrund einer fehlenden Niedervoltenergieversorgung das Kühlsystem des Wechselrichters nicht funktionsfähig ist.

Gemäß einer Ausführungsform der Betriebszustandsschaltung kann die Auswerteeinrichtung dazu ausgelegt sein, Ausgangsspannungen des Wechselrichters an den Phasenanschlüssen zu erfassen und insbesondere auf der Basis der erfassten Ausgangsspannungen eine Drehzahl der elektrischen Maschine zu ermitteln. Der einstellbare Freilaufschwellwert kann dabei einen ersten Spannungsschwellwert aufweisen, wenn die ermittelte Drehzahl unter einem einstellbaren Drehzahlschwellwert liegt, und einen zweiten Spannungsschwellwert aufweisen, der kleiner als der erste Spannungsschwellwert ist, wenn die ermittelte Drehzahl über dem einstellbaren Drehzahlschwellwert liegt. Bei hohen Drehzahlen ist das durch die elektrische Maschine erzeugte Bremsmoment niedriger als bei niedrigen Drehzahlen, so dass oberhalb des einstellbaren Drehzahlschwellwert der Schutz des Gleichspannungszwischenkreises gegenüber Überspannungen priorisiert werden kann, indem der aktive Kurzschlusszustand schon bei geringeren Eingangsspannungen eingestellt wird.

Gemäß einer weiteren Ausführungsform der Betriebszustandsschaltung kann die Ansteuereinrichtung eine Hardwareschaltung aufweisen, welche dazu ausgelegt ist, den Wechselrichter in einem Kurzschlusszustand zu halten, solange die erfasste Eingangsspannung größer als ein einstellbarer Kurzschlussschwellwert ist. Dies stellt vorteilhafterweise sicher, dass die Spannung im Gleichspannungszwischenkreis einen sicherheitskritischen Schwellwert nicht überschreiten kann. Beispielsweise kann der einstellbare Kurzschlussschwellwert der um eine Sicherheitsmarge abgesenkten minimalen Batteriespannung der Hochvoltbatterie entsprechen.

Gemäß einer weiteren Ausführungsform der Betriebszustandsschaltung kann der einstellbare Kurzschlussschwellwert dem einstellbaren Freilaufschwellwert entsprechen, wenn die ermittelte Drehzahl unter dem einstellbaren Drehzahlschwellwert liegt, und wobei der einstellbare Kurzschlussschwellwert größer als der einstellbare Freilaufschwellwert ist, wenn die ermittelte Drehzahl über dem einstellbaren Drehzahlschwellwert liegt. Dadurch kann der einstellbare Freilaufschwellwert zwischen dem minimal benötigten Schaltschwellwert für die Energieversorgung der Ansteuerung der Schalteinrichtungen des Wechselrichters und dem einstellbaren Kurzschlussschwellwert flexibel variiert werden, um in den niedrigen Drehzahlbereichen eine möglichst lange Freilaufdauer und damit ein möglichst geringes mittleres Bremsmoment durch die elektrische Maschine gewährleisten zu können.

Gemäß einer Ausführungsform des erfindungsgemäßen elektrischen Antriebssystems kann das Antriebssystem weiterhin eine n-phasige elektrische Maschine umfassen, deren Leistungsanschlüsse mit den Phasenanschlüssen des Wechselrichters gekoppelt sind. Vorteilhafterweise kann diese eine permanent-erregte Synchronmaschine sein.

Gemäß einer weiteren Ausführungsform des erfindungsgemäßen elektrischen Antriebssystems kann der Gleichspannungszwischenkreis mit der Betriebszustandsschaltung gekoppelt sein, und dazu ausgelegt ist, die Betriebszustandsschaltung mit elektrischer Energie zu versorgen. Dies ermöglicht eine autarke Energieversorgung der Betriebszustandsschaltung, unabhängig von der Versorgung mit Energie aus der Niedervoltseite. Insbesondere bei einem Ausfall der Niedervoltenergieversorgung, beispielsweise bei einem Defekt oder einer Fehlfunktion, oder bei einem Abschleppen eines mit dem erfindungsgemäßen elektrischen Antriebssystem ausgestatteten elektrisch betriebenen Fahrzeug, kann dies eine zuverlässige Implementierung einer Betriebszustandskontrolle des Wechselrichters gewährleisten.

Gemäß einer Ausführungsform des erfindungsgemäßen Verfahrens kann das Verfahren weiterhin die Schritte des Erfassens der Ausgangsspannungen des Wechselrichters an den Phasenanschlüssen des Wechselrichters, und des Ermittelns der Drehzahl der elektrischen Maschine auf der Basis der erfassten Ausgangsspannungen umfassen. Dabei kann der einstellbare Freilaufschwellwert einen ersten Spannungsschwellwert aufweisen, wenn die ermittelte Drehzahl unter einem einstellbaren Drehzahlschwellwert liegt, und einen zweiten Spannungsschwellwert aufweisen, der kleiner als der erste Spannungsschwellwert ist, wenn die ermittelte Drehzahl über dem einstellbaren Drehzahlschwellwert liegt.

Gemäß einer weiteren Ausführungsform des erfindungsgemäßen Verfahrens kann das Verfahren weiterhin den Schritt des Haltens des Wechselrichters in einem Kurzschlusszustand umfassen, solange die erfasste Eingangsspannung größer als der einstellbare Freilaufschwellwert ist.

Weitere Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines elektrischen Antriebssystems gemäß einer Ausführungsform der Erfindung;
- Fig. 2: eine schematische Darstellung eines Betriebszustandsdiagramms für die Ansteuerung eines Wechselrichters eines elektrischen Antriebssystems gemäß einer weiteren Ausführungsform der Erfindung;
- Fig.3: eine schematische Darstellung eines Strom-Zeit-Diagramms für die Phasenströme eines Wechselrichters bei einem Wechsel der Betriebszustände eines Wechselrichters gemäß einer weiteren Ausführungsform der Erfindung; und
- Fig. 4: eine schematische Darstellung eines Verfahrens zum Einstellen von Betriebszuständen eines Wechselrichters gemäß einer weiteren Ausführungsform der Erfindung.

In den Figuren sind gleiche und funktionsgleiche Elemente, Merkmale und Komponenten - sofern nichts Anderes ausgeführt ist - jeweils mit denselben Bezugszeichen versehen. Es versteht sich, dass Komponenten und Elemente in den Zeichnungen aus Gründen der Übersichtlichkeit nicht notwendigerweise maßstabsgetreu wiedergegeben sind.

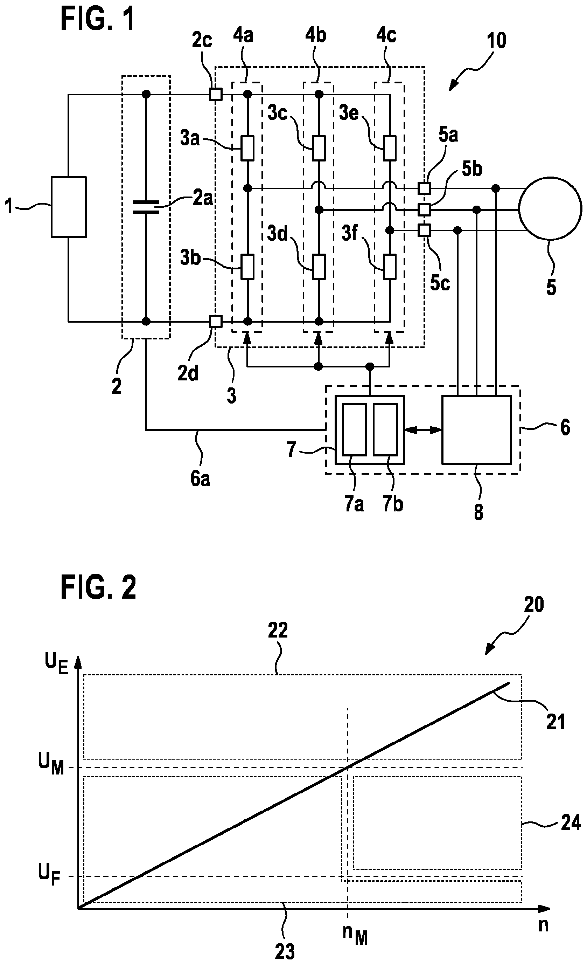

Fig. 1 zeigt eine schematische Darstellung eines elektrischen Antriebssystems 10. Das elektrische Antriebssystem 10 umfasst eine Hochspannungsenergiequelle 1, beispielsweise eine Hochspannungsquelle wie eine Traktionsbatterie, welche eine Versorgungsspannung bereitstellen kann. Die Hochspannungsenergiequelle 1 kann in einem Antriebssystem eines elektrisch betriebenen Fahrzeugs beispielsweise als Energiespeicher 1 ausgelegt sein. Es ist auch möglich, dass die Hochspannungsenergiequelle 1 netzbasiert ist, das heißt, dass das elektrische Antriebssystem elektrische Energie aus einem Energieversorgungsnetz bezieht. Die Versorgungsspannung der Hochspannungsenergiequelle 1 kann über einen Zwischenkreis 2 mit einem Zwischenkreiskondensator 2a an Versorgungsanschlüsse 2c und 2d eines Wechselrichters 3, beispielsweise eines Pulswechselrichters, angelegt werden. Dabei liegt ein Anschluss der Hochspannungsenergiequelle 1 auf hohem Potential, und ein Anschluss der Hochspannungsenergiequelle 1 auf niedrigem Potential, beispielsweise Masse. Der Wechselrichter 3 kann beispielsweise einen dreiphasigen Ausgang mit Phasenanschlüssen 5a, 5b, 5c aufweisen, die über Leistungsanschlüsse an eine dreiphasige elektrische Maschine 5 angeschlossen sind. Die elektrische Maschine 5 kann beispielsweise eine Synchronmaschine 5 bzw. ein Synchronmotor 5 sein.

Der Wechselrichter 3 ist im vorliegenden Beispiel der Fig. 1 als Vollbrückenschaltung oder B6-Brücke ausgelegt. Dazu umfasst der Wechselrichter 3 obere Halbbrückenschalter mit auf hohes Potential bezogenen Schalteinrichtungen 3a, 3c, 3e und untere Halbbrückenschalter mit auf niedriges Potential bezogenen Schalteinrichtungen 3b, 3d, 3f. Je zwei der Halbbrückenschalter sind jeweils als Halbbrücke 4a, 4b und 4c mit Mittelabgriff ausgestaltet. Die Schalteinrichtungen 3a bis 3f können beispielsweise jeweils Leistungshalbleiterschalter aufweisen. Die Schalteinrichtungen 3a bis 3f können beispielsweise Feldeffekttransistorschalter wie n-MOSFETs (n-leitende Metal Oxide Semiconductor Field-Effect Transistors, Anreicherungstyp), JFETs (Junction Field-Effect Transistors) oder p-MOSFETs (p-leitende Metal Oxide Semiconductor Field-Effect Transistors) aufweisen. Die Schalteinrichtungen 3a bis 3f können auch IGBTs (Insulated Gate Bipolar Transistors, Bipolartransistor mit isolierter Gate-Elektrode) aufweisen.

Der Wechselrichter 3 kann durch entsprechende Ansteuerung der Schalteinrichtungen 3a bis 3f eine dreiphasige Wechselspannung zur Ansteuerung der elektrischen Maschine 5 erzeugen. Dazu wird an den jeweiligen Phasenanschlüssen 5a, 5b, 5c des Wechselrichters 3 eine entsprechende Phasenspannung erzeugt. In dem in Fig. 1 dargestellten Beispiel sind drei Phasenanschlüsse und eine B6-Brücke gezeigt, wobei jede andere Anzahl von Phasenanschlüssen mit einer entsprechenden Anzahl an Halbbrückenzweigen bzw. Halbbrücken ebenso möglich ist. Die Schalteinrichtungen 3a, 3c, 3e werden dabei als High-Side-Schalter bezeichnet, die Schalteinrichtungen 3b, 3d, 3f als Low-Side-Schalter.

Der Wechselrichter 3 ist dazu ausgelegt, über entsprechende Ansteuerung der Schalteinrichtungen 3a bis 3f die Phasenanschlüsse 5a, 5b, 5c der elektrischen Maschine 5 wechselseitig gegen ein hohes Versorgungspotential, beispielsweise die Versorgungsspannung, oder ein niedriges Bezugspotential, beispielsweise ein Massepotential zu schalten. Der Wechselrichter 3 bestimmt Leistung und Betriebsart der elektrischen Maschine 5 und wird von der Steuereinrichtung 7 entsprechend angesteuert.

Die elektrische Maschine 5 kann somit wahlweise im Motor- oder Generatorbetrieb betrieben werden, beispielsweise in einem elektrischen Antriebssystem eines Elektro- oder Hybridfahrzeugs. Im Motorbetrieb erzeugt sie ein zusätzliches Antriebsmoment, das einen Verbrennungsmotor zum Beispiel in einer Beschleunigungsphase unterstützt. Im Generatorbetrieb kann dagegen mechanische Energie in elektrische Energie gewandelt und in dem Energiespeicher 1 gespeichert bzw. in ein elektrisches Versorgungsnetz rückgespeist werden.

Das elektrische Antriebssystem umfasst neben der Steuereinrichtung 7 eine Auswerteeinrichtung 6. Die Ansteuereinrichtung 7 und die Auswerteeinrichtung 6 können dabei in einer Betriebszustandsschaltung 6 integriert sein, beispielsweise in einem Mikrocontroller. Die Betriebszustandsschaltung 6 kann beispielsweise mit dem Gleichspannungszwischenkreis 2 gekoppelt sein, um mit elektrischer Energie von der Hochvoltseite des Wechselrichters 3 versorgt zu werden. Im Normalfall ist jedoch eine nicht gezeigte Niedervoltenergieversorgungseinrichtung vorgesehen sein, die die Betriebszustandsschaltung 6 mit elektrischer Energie von der Niedervoltseite des Wechselrichters 3 versorgt, das heißt in einem regulären Ansteuerbetrieb durch die Niedervoltseite.

Ein Freilaufmodus des Wechselrichters 3 kennzeichnet sich dadurch, dass alle Schalteinrichtungen 3a bis 3f geöffnet, das heißt im sperrenden Zustand sind, und ein eventuell in der elektrischen Maschine 5 vorhandener Strom über die den Schalteinrichtungen 3a bis 3f zugeordneten Freilaufdioden geleitet und damit verringert oder ganz abgebaut werden kann. In einem ersten Kurzschlusszustand des Wechselrichters 3 sind die Low-Side-Schalter 3b, 3d, 3f geschlossen, während die High-Side-Schalter 3a, 3c, 3e geöffnet sind. In diesem Zustand sind daher die Phasenanschlüsse 5a, 5b, 5c jeweils mit dem Eingangsanschluss 2d verbunden. Dadurch wird ein Stromfluss durch die Freilaufdioden der Low-Side-Schalter bzw. die Low-Side-Schalter 3b, 3d, 3f ermöglicht. In einem zweiten Kurzschlusszustand des Wechselrichters 3 hingegen sind die Low-Side-Schalter 3b, 3d, 3f geöffnet, während die High-Side-Schalter 3a, 3c, 3e geschlossen sind. In diesem Zustand sind daher die Phasenanschlüsse 5a, 5b, 5c jeweils mit dem Eingangsanschluss 2c verbunden. Dadurch wird ein Stromfluss durch die Freilaufdioden der High-Side-Schalter bzw. die High-Side-Schalter 3a, 3c, 3e ermöglicht.

Im Falle des Ausfalls der Niedervoltenergieversorgung oder des Niedervoltsystems übernimmt die Hochvoltseite des Wechselrichters die Energieversorgung der Betriebszustandsschaltung 6 und insbesondere der Steuereinrichtung 7 für die Wechselrichter 3. Damit die Steuereinrichtung 7 den Betriebszustand des aktiven Kurzschlusses, das heißt, einen der oben geschilderten ersten und zweiten Kurzschlusszustände einstellen kann, muss die Zwischenkreisspannung über einem minimalen Schwellwert liegen, um die Schalteinrichtungen 3a bis 3f zuverlässig einzuschalten. Ohne gezielte Ansteuerstrategie sinkt die Zwischenkreisspannung während einer ersten Zeitdauer ab, bis sie unter den minimalen Schwellwert fällt und die Schalteinrichtungen 3a bis 3f automatisch geöffnet werden. Dadurch lädt die elektrische Maschine 5 den Zwischenkreis sehr schnell mit der zu diesem Zeitpunkt in den Statorinduktivitäten gespeicherten Energie wieder auf, so dass die Zwischenkreisspannung wieder über den minimalen Schwellwert ansteigt, und der Kurzschlusszustand wieder hergestellt werden kann. Dieses Prozedere wiederholt sich, wobei die Zwischenkreisspannung in periodischen Abständen durch die schnelle Aufladung einen sägezahnartigen zeitlichen Verlauf aufweist. Das Verhältnis der gesamten Zeitdauer, in der sich der Wechselrichter 3 bei dieser Situation in einem Kurzschlusszustand befindet, zur gesamten Zeitdauer, in der sich der Wechselrichter 3 in einem Freilaufmodus befindet, ist sehr hoch, so dass das Fahrzeug näherungsweise mit einem konstanten Bremsmoment beaufschlagt wird. Insbesondere bei niedrigen Drehzahlen der elektrischen Maschine 5 ist dieses Bremsmoment verhältnismäßig hoch.

Fig. 2 zeigt eine schematische Darstellung eines Betriebszustandsdiagramms 20 für die Ansteuerung eines Wechselrichters eines elektrischen Antriebssystems. Beispielsweise kann das Betriebszustandsdiagramm 20 für eine Ansteuerstrategie des Wechselrichters 3 des elektrischen Antriebssystems 10 in Fig. 1 herangezogen werden. Dabei kann die Ansteuerstrategie durch die Betriebszustandsschaltung 6 in Fig. 1 implementiert werden.

Dazu ist die Auswerteeinrichtung 8 der Fig. 1 mit den Phasenanschlüssen 5a, 5b, 5c des Wechselrichters 3 verbunden und kann dazu ausgelegt sein, Ausgangsspannungen des Wechselrichters 3 zu erfassen. Insbesondere kann die Auswerteeinrichtung 8 dazu ausgelegt sein, induzierte Polradspannungen in der elektrischen Maschine 5 zu erfassen. Die Auswerteeinrichtung 8 kann beispielsweise einen Mikrocontroller umfassen, welcher die Polradspannung in eine momentane Drehzahl n bzw. Polradfrequenz der elektrischen Maschine 5 umrechnet. Selbstverständlich kann die momentane Drehzahl n auch über andere Sensoren oder Erfassungseinrichtungen erfasst bzw. ermittelt werden. Zudem kann die Auswerteeinrichtung 8 eine Eingangsspannung U_{E} an den Eingangsanschlüssen 2c, 2d des Wechselrichters 3 erfassen. Dies kann beispielsweise über die ohnehin vorhandene Hochvoltversorgungsleitung 6a erfolgen, über die die Betriebszustandsschaltung 6 mit elektrischer Energie versorgt wird.

In Abhängigkeit von der ermittelten Drehzahl n und der Eingangsspannung U_{E} an den Eingangsanschlüssen 2c, 2d des Wechselrichters 3 kann die Ansteuereinrichtung 7 dann die Schalteinrichtungen 3a bis 3f des Wechselrichters 3 derart ansteuern, dass ein Betriebszustand gemäß der in Fig. 2 dargestellten beispielhaften Betriebsbereiche 22, 23, 24 eingestellt wird. Der Verlauf 21 zeigt dabei die maximale Zwischenkreisspannung, die sich im Freilaufmodus in Abhängigkeit von der Drehzahl n der elektrischen Maschine 3 einstellen kann. Dabei können beispielswise die High-Side-Schalter immer gesperrt bleiben.

Bei niedrigen Drehzahlen kann die elektrische Maschine 5 ein hohes Bremsmoment erzeugen, so dass die Ansteuereinrichtung 7 dazu ausgelegt ist, in dem Wechselrichter 3 einen Freilaufzustand einzustellen, wenn die in der Auswerteeinrichtung 8 ermittelte momentane Drehzahl n einen vorbestimmten Drehzahlschwellwert n_{M} unterschreitet. Hingegen kann bei hohen Drehzahlen die hohe induzierte Polradspannung die Spannung in dem Gleichspannungszwischenkreis 2 übersteigen und hohe Ladeströme auf der Hochvoltseite des Wechselrichters erzeugen oder einen kritischen Grenzwert überschreiten (beispielsweise 60 Volt), was zu Schädigungen der Leistungselektronik und der Hochspannungsenergiequelle 1 führen kann. In diesem Fall kann die die Ansteuereinrichtung 7 dazu ausgelegt sein, in dem Wechselrichter 3 einen aktiven Kurzschlusszustand einzustellen, wenn die in der Auswerteeinrichtung 8 ermittelte momentane Drehzahl n den vorbestimmten Drehzahlschwellwert n_{M} überschreitet.

Im Bereich 22 liegt die Spannung im Gleichspannungszwischenkreis 2, das heißt die Eingangsspannung U_{E} des Wechselrichters 3 über einem vorbestimmten bzw. vorbestimmbaren Kurzschlussschwellwert U_{M}. Dieser Kurzschlussschwellwert U_{M} kann beispielsweise einem Wert entsprechen, der gegenüber einer minimalen Betriebsspannung der Hochspannungsenergiequelle 1 um einen gewissen Betrag abgesenkt ist. Beispielsweise kann der Kurzschlussschwellwert U_{M} auf 90% der minimalen Betriebsspannung der Hochspannungsenergiequelle 1 festgelegt werden. Oberhalb dieses Kurzschlussschwellwerts U_{M} wird der Wechselrichter 3 durch die Ansteuereinrichtung 7 stets in einem aktiven Kurzschlusszustand gehalten, um eine Überspannung im Gleichspannungszwischenkreis 2 zu vermeiden. Dazu kann die Ansteuereinrichtung 7 eine Hardwareschaltung 7b aufweist, welche dazu ausgelegt ist, den Wechselrichter 3 in einem Kurzschlusszustand zu halten, solange die erfasste Eingangsspannung U_{E} größer als der einstellbarer Kurzschlussschwellwert U_{M} ist. Dieser einstellbare Kurzschlussschwellwert U_{M} kann aus Sicherheitsgründen unabhängig von der aktuellen Drehzahl n der elektrischen Maschine 5 festgelegt werden. Die Hardwareschaltung 7b kann beispielsweise als Komparatorschaltung integriert werden, die die Eingangsspannung U_{E} mit dem einstellbaren Kurzschlussschwellwert U_{M} vergleicht und den Kurzschlusszustand gegenüber allen anderen Betriebszuständen des Wechselrichters 3 priorisiert. Der Kurzschlusszustand kann dabei auch mit der Energieversorgung durch die Hochvoltseite gewährleistet werden, da die Spannung des Gleichspannungszwischenkreises 2 stets hoch genug ist.

Unterhalb des einstellbaren Kurzschlussschwellwerts U_{M} können je nach Drehzahlbereich der elektrischen Maschine 5 zwei verschiedene Ansteuerbereiche 23 und 24 implementiert werden. Der Ansteuerbereich 23 ist ein Ansteuerbereich, in dem die Ansteuereinrichtung 7 dazu ausgelegt ist, die jeweiligen Schalteinrichtungen 3a bis 3f der Halbbrücken 4a, 4b, 4c des Wechselrichters in einem Freilaufmodus anzusteuern. Dazu kann die Auswerteeinrichtung 8 dazu ausgelegt sein, ein Freilauftriggersignal zu erzeugen und an die Ansteuereinrichtung 7 auszugeben, wenn die erfasste Eingangsspannung U_{E} geringer als ein einstellbarer Freilaufschwellwert ist. Der einstellbare Freilaufschwellwert kann dabei drehzahlabhängig sein. Beispielsweise kann in einem unteren Drehzahlbereich unterhalb eines Drehzahlschwellwerts n_{M} der elektrischen Maschine 5 der einstellbare Freilaufschwellwert dem einstellbaren Kurzschlussschwellwerts U_{M} entsprechen. Oberhalb des Drehzahlschwellwerts n_{M} der elektrischen Maschine 5 kann der einstellbare Freilaufschwellwert einem gegenüber dem einstellbaren Kurzschlussschwellwert U_{M} abgesenkten Freilaufschwellwert U_{F} entsprechen.

Der Freilaufschwellwert U_{F} kann dabei einem Spannungswert entsprechen, der um einen geringen Betrag höher liegt als die für eine zuverlässige Ansteuerung der Schalteinrichtung 3a bis 3f des Wechselrichters 3 notwendige minimale Spannung im Gleichspannungszwischenkreis 2. Beispielsweise kann diese minimal notwendige Spannung 30 Volt betragen. Der Freilaufschwellwert U_{F} kann in diesem Fall beispielsweise auf etwa 60 Volt festgelegt werden.

Nach Empfang des Freilauftriggersignals kann die Ansteuereinrichtung 7 dazu ausgelegt sein, die jeweiligen Schalteinrichtungen 3a bis 3f der Halbbrücken 4a, 4b, 4c erst dann in einen geöffneten Zustand zu versetzen, wenn der jeweilige erfasste Phasenstrom an dem zugeordneten Phasenanschluss 5a, 5b, 5c einen Nulldurchgang oder eine aus dem Wechselrichter 3 herausweisende Stromrichtung aufweist. Dadurch kann sichergestellt werden, dass die Bedingungen für ein stromloses Schalten (ZCS, "zero current switching") stets gewährleistet sind. Dies hat zur Folge, dass zum Zeitpunkt des Schaltens in den Freilaufmodus keine Energie in den Statorinduktivitäten der elektrischen Maschine 5 gespeichert ist, die sich durch das Sperren der Schalteinrichtungen 3a bis 3f schlagartig in den Gleichspannungszwischenkreis 2 entladen würde. Dadurch steigt die Spannung im Gleichspannungszwischenkreis 2 nicht unkontrolliert an, und der Freilaufmodus kann verhältnismäßig lange beibehalten werden.

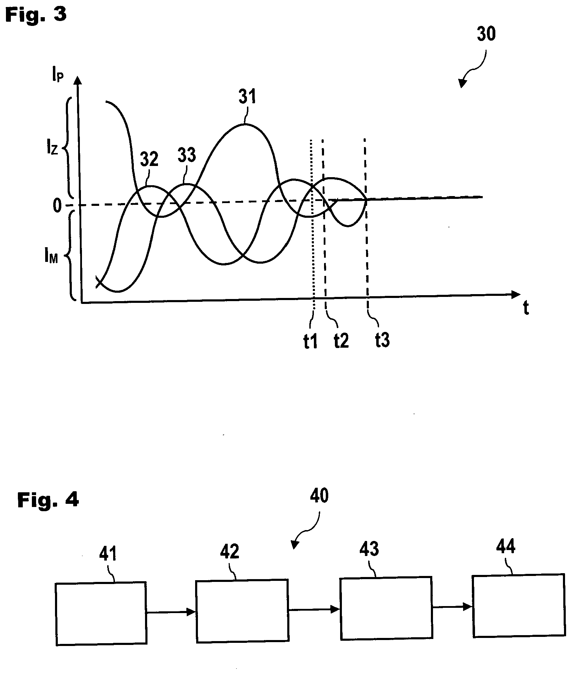

Die Maximierung der Zeitdauer, während der der Wechselrichter 3 im Freilaufmodus betrieben werden kann, minimiert zugleich das zeitlich gemittelte Bremsmoment, was von der elektrischen Maschine 5 auf die Welle des elektrischen Antriebssystems übertragen werden kann. Fig. 3 zeigt eine schematische Darstellung eines Strom-Zeit-Diagramms 30 für die Phasenströme I_{P} eines Wechselrichters bei einem Wechsel der Betriebszustände des Wechselrichters. Das Strom-Zeit-Diagramm 30 kann beispielsweise für Phasenstromverläufe 31, 32 und 33 eines dreiphasigen Wechselrichters 3 gelten, wie in Fig. 1 dargestellt. Dabei gilt das Strom-Zeit-Diagramm 30 beispielsweise für einen Wechsel von einem der Ansteuerbereiche 22 oder 24 in den Ansteuerbereich 23, in dem die Ansteuereinrichtung 7 den Wechselrichter 3 von einem aktiven Kurzschlusszustand in einen Freilaufmodus überführt.

Zu einem Zeitpunkt t1 erfolgt die Ausgabe eines Freilauftriggersignals durch die Auswerteeinrichtung 8, beispielsweise wenn eine entsprechende Betriebszustandswechselbedingung in Abhängigkeit von der ermittelten Drehzahl n und/oder der ermittelten Eingangsspannung U_{E} des Wechselrichters 3 erfüllt ist. Zu diesem Zeitpunkt weisen die beiden Phasenstromverläufe 32 und 33 einen Phasenstromwert I_{Z} auf, welcher von der elektrischen Maschine 5 in den Wechselrichter 3 hinein läuft. Wenn die Schalteinrichtungen der den beiden Phasenstromverläufen 32 und 33 zugehörigen Halbbrücken des Wechselrichters 3 zum Zeitpunkt t1 in geschlossenen Zustand versetzt werden würden, würde sich die in den entsprechenden Statorinduktivitäten der elektrischen Maschine 5 gespeicherte elektrische Energie schlagartig in den Gleichspannungszwischenkreis 2 entladen, was zu einem unkontrollierten und damit unerwünschten Anstieg der Spannung im Gleichspannungszwischenkreis 2 führen würde. Die Ansteuereinrichtung 7 hält daher zum Zeitpunkt t1, also nach dem Empfang des Freilauftriggersignals von der Auswerteeinrichtung 8, die Schalteinrichtungen der den beiden Phasenstromverläufen 32 und 33 zugehörigen Halbbrücken zunächst noch in leitendem Zustand.

Der Phasenstromverlauf 31 hingegen weist einen Phasenstromwert I_{M} auf, welcher von dem Wechselrichter 3 in die elektrische Maschine 5 hinein läuft. Damit kann die Ansteuereinrichtung 7 die dem Phasenstromverlauf 31 zugehörigen Halbbrücken des Wechselrichters 3 bzw. deren Schalteinrichtungen bereits zum Zeitpunkt t1 in geschlossenen Zustand versetzen. Nachdem der Phasenstrom zu einem späteren Zeitpunkt vollständig in die Statorinduktivität der elektrischen Maschine 5 geflossen ist, bleibt der Phasenstrom aufgrund des in diese Halbbrücke eingestellten Freilaufzustands bei Null.

Die Ansteuereinrichtung 7 überwacht in Folge nach dem Zeitpunkt t1, das heißt nach dem Empfang des Freilauftriggersignals von der Auswerteeinrichtung 8, die beiden Phasenstromverläufe 32 und 33. Zu jeweiligen Zeitpunkten t2 und t3, zu denen die Phasenstromverläufe 32 und 33 dann Nulldurchgänge des Phasenstroms aufweisen, können auch die jeweils zugehörigen Halbbrücken bzw. deren Schalteinrichtungen in den Freilaufmodus geschaltet werden. Eine typische Zeitverzögerung zwischen der Ausgabe des Freilauftriggersignals und der vollständigen Aktivierung des Freilaufmodus in dem Wechselrichter 3 kann dabei etliche Millisekunden betragen. Demgegenüber wird der Gleichspannungszwischenkreis 2 jedoch nicht auf hohe, die sofortige Einstellung eines Kurzschlusszustands notwendig machende Spannungen aufgeladen, deren Abbau bis zu einer Sekunde dauern kann. Das bedeutet, dass der Freilaufmodus im zeitlichen Mittel erheblich länger aufrechterhalten werden kann, was in Konsequenz das im zeitlichen Mittel durch die elektrische Maschine 5 erzeugte Bremsmoment ebenfalls minimiert.

Fig. 4 zeigt eine schematische Darstellung eines Verfahrens 40 zum Betreiben eines Wechselrichters. Das Verfahren 40 kann insbesondere zum Einstellen von Betriebszuständen des Wechselrichters 3 in Fig. 1 eingesetzt werden, welcher eine n-phasige elektrische Maschine 5 über Phasenanschlüsse 5a, 5b, 5c mit einer n-phasigen Versorgungsspannung versorgt. Das Verfahren 40 umfasst in einem ersten Schritt 41 ein Erfassen einer Eingangsspannung U_{E} des Wechselrichters 3. In einem zweiten Schritt 42 können Phasenströme an den Phasenanschlüssen 5a, 5b, 5c des Wechselrichters 3 erfasst werden. In einem Schritt 43 kann ein Freilauftriggersignal erzeugt werden, beispielsweise durch die in Fig. 1 gezeigte Auswerteeinrichtung 8, wenn die erfasste Eingangsspannung U_{E} geringer als ein einstellbarer Freilaufschwellwert U_{M} bzw. U_{F} ist. Dann kann in einem Schritt 44 ein Schalten des Wechselrichters von einem Kurzschlusszustand in einen Freilaufmodus in Abhängigkeit von der erfassten Eingangsspannung U_{E} erfolgen.

Beim Schalten in den Freilaufmodus werden die jeweiligen Schalteinrichtungen 3a bis 3f der Halbbrücken 4a, 4b, 4c nach Empfang des Freilauftriggersignals erst dann in einen geöffneten Zustand versetzt, wenn der jeweilige erfasste Phasenstrom an dem zugeordneten Phasenanschluss 5a, 5b, 5c einen Nulldurchgang oder eine aus dem Wechselrichter 3 herausweisende Stromrichtung aufweist.

Optional kann das Verfahren 40 weiterhin die Schritte des Erfassens der Ausgangsspannungen des Wechselrichters 3 an den Phasenanschlüssen 5a, 5b, 5c des Wechselrichters 3, und des Ermittelns der Drehzahl n der elektrischen Maschine 5 auf der Basis der erfassten Ausgangsspannungen aufweisen. Der einstellbare Freilaufschwellwert kann dabei gemäß Fig. 2 zwischen ersten und zweiten Spannungsschwellwerten variiert werden, je nach Drehzahlbereich der ermittelten Drehzahl n. Darüber hinaus kann optional ein Halten des Wechselrichters 3 in einem Kurzschlusszustand erfolgen, solange die erfasste Eingangsspannung U_{E} größer als der einstellbare Freilaufschwellwert ist, unabhängig von der erfassten Drehzahl n.

## Patentansprüche

1. Betriebszustandsschaltung (6) zum Ansteuern eines Wechselrichters (3) mit jeweilige Schalteinrichtungen (3a; ...; 3f) aufweisenden Halbbrücken (4a, 4b, 4c), welcher eine n-phasige elektrische Maschine (5) über den jeweiligen Halbbrücken (4a, 4b, 4c) zugeordnete Phasenanschlüsse (5a, 5b, 5c) mit einer n-phasigen Versorgungsspannung versorgt, wobei n ≥ 1, mit:
einer Auswerteeinrichtung (8), welche mit den Phasenanschlüssen (5a, 5b, 5c) des Wechselrichters (3) verbunden ist, und welche dazu ausgelegt ist, Phasenströme an den Phasenanschlüssen (5a, 5b, 5c) des Wechselrichters (3) zu erfassen; und
einer Ansteuereinrichtung (7), welche mit der Auswerteeinrichtung (8) gekoppelt ist, und welche dazu ausgelegt ist, den Wechselrichter (3) von einem Kurzschlusszustand in einen Freilaufmodus zu schalten,
wobei die Auswerteeinrichtung (8) dazu ausgelegt ist, ein Freilauftriggersignal zu erzeugen und an die Ansteuereinrichtung (7) auszugeben, und
wobei die Ansteuereinrichtung (7) dazu ausgelegt ist, die jeweiligen Schalteinrichtungen (3a; ...;3f) der Halbbrücken (4a, 4b, 4c) nach Empfang des Freilauftriggersignals erst dann in einen geöffneten Zustand zu versetzen, wenn der jeweilige erfasste Phasenstrom an dem zugeordneten Phasenanschluss (5a, 5b, 5c) einen Nulldurchgang oder eine von dem Wechselrichter (3) in die elektrische Maschine (5) hineinlaufende Stromrichtung aufweist,
**dadurch gekennzeichnet,**
**dass** die Auswerteeinrichtung (8) mit gleichspannungsseitigen Eingangsanschlüssen (2c, 2d) des Wechselrichters (3) verbunden ist,
**dass** die Auswerteeinrichtung (8) dazu ausgelegt ist, eine gleichspannungsseitige Eingangsspannung (U_{E}) des Wechselrichters (3) an den gleichspannungsseitigen Eingangsanschlüssen (2c, 2d) des Wechselrichters (3) zu erfassen,
**dass** die Ansteuereinrichtung (7) dazu ausgelegt ist, den Wechselrichter (3) in Abhängigkeit von der erfassten gleichspannungsseitigen Eingangsspannung (U_{E}) von dem Kurzschlusszustand in den Freilaufmodus zu schalten, und
**dass** die Auswerteeinrichtung (8) dazu ausgelegt ist, das Freilauftriggersignal zu erzeugen und an die Ansteuereinrichtung (7) auszugeben, wenn die erfasste gleichspannungsseitige Eingangsspannung (U_{E}) geringer als ein einstellbarer Freilaufschwellwert (U_{M}; U_{F}) ist.

2. Betriebszustandsschaltung (6) nach Anspruch 1, wobei die Auswerteeinrichtung (8) dazu ausgelegt ist, Ausgangsspannungen des Wechselrichters (3) an den Phasenanschlüssen (5a, 5b, 5c) zu erfassen und insbesondere auf der Basis der erfassten Ausgangsspannungen eine Drehzahl (n) der elektrischen Maschine (5) zu ermitteln, und
wobei der einstellbare Freilaufschwellwert (U_{M}; U_{F}) einen ersten Spannungsschwellwert (U_{M}) aufweist, wenn die ermittelte Drehzahl (n) unter einem einstellbaren Drehzahlschwellwert (n_{M}) liegt, und einen zweiten Spannungsschwellwert (U_{F}) aufweist, der kleiner als der erste Spannungsschwellwert (U_{M}) ist, wenn die ermittelte Drehzahl (n) über dem einstellbaren Drehzahlschwellwert (n_{M}) liegt.

3. Betriebszustandsschaltung (6) nach einem der Ansprüche 1 und 2, wobei die Ansteuereinrichtung (7) eine Hardwareschaltung (7b) aufweist, welche dazu ausgelegt ist, den Wechselrichter (3) in einem Kurzschlusszustand zu halten, solange die erfasste gleichspannungsseitige Eingangsspannung (U_{E}) größer als ein einstellbarer Kurzschlussschwellwert ist.

4. Betriebszustandsschaltung (6) nach Anspruch 2 und 3, wobei der einstellbare Kurzschlussschwellwert dem einstellbaren Freilaufschwellwert (U_{M}) entspricht, wenn die ermittelte Drehzahl (n) unter dem einstellbaren Drehzahlschwellwert (n_{M}) liegt, und wobei der einstellbare Kurzschlussschwellwert größer als der einstellbare Freilaufschwellwert (U_{F}) ist, wenn die ermittelte Drehzahl (n) über dem einstellbaren Drehzahlschwellwert (n_{M}) liegt.

5. Elektrisches Antriebssystem (10), mit:
einem Gleichspannungszwischenkreis (2), welcher dazu ausgelegt ist, von einer Hochspannungsquelle (1) mit einer Gleichspannung versorgt zu werden;
einem Wechselrichter (3) mit jeweilige Schalteinrichtungen (3a; ...; 3f) aufweisenden Halbbrücken (4a, 4b, 4c), welcher mit dem Gleichspannungszwischenkreis (2) verbunden ist, und welcher dazu ausgelegt, eine n-phasige Versorgungsspannung für eine n-phasige elektrische Maschine (5) an n Phasenanschlüssen (5a, 5b, 5c) bereitzustellen, wobei n ≥ 1; und
einer Betriebszustandsschaltung (6) nach einem der Ansprüche 1 bis 4, welche dazu ausgelegt ist, die Vielzahl der Schalteinrichtungen (3a; ...; 3f) des Wechselrichters (3) zum Einstellen eines Freilaufzustands oder eines aktiven Kurzschlusses anzusteuern.

6. Elektrisches Antriebssystem (10) nach Anspruch 5, weiterhin mit:
einer n-phasigen elektrischen Maschine (5), deren Leistungsanschlüsse mit den Phasenanschlüssen (5a, 5b, 5c) des Wechselrichters (3) gekoppelt sind.

7. Elektrisches Antriebssystem (10) nach einem der Ansprüche 5 und 6, wobei Gleichspannungszwischenkreis (2) mit der Betriebszustandsschaltung (6) gekoppelt ist, und dazu ausgelegt ist, die Betriebszustandsschaltung (6) mit elektrischer Energie zu versorgen.

8. Verfahren (40) zum Einstellen von Betriebszuständen eines Wechselrichters (3), welcher jeweilige Schalteinrichtungen (3a; ...; 3f) aufweisende Halbbrücken (4a, 4b, 4c) umfasst und welcher eine n-phasige elektrische Maschine (5) über den jeweiligen Halbbrücken (4a, 4b, 4c) zugeordnete Phasenanschlüsse (5a, 5b, 5c) mit einer n-phasigen Versorgungsspannung versorgt, wobei n ≥ 1, mit den Schritten:
Erfassen (42) von Phasenströmen an den Phasenanschlüssen (5a, 5b, 5c) des Wechselrichters (3);
Erzeugen (43) eines Freilauftriggersignals; und
Schalten (44) des Wechselrichters (3) von einem Kurzschlusszustand in einen Freilaufmodus,
wobei die jeweiligen Schalteinrichtungen (3a; ...;3f) der Halbbrücken (4a, 4b, 4c) nach Empfang des Freilauftriggersignals erst dann in einen geöffneten Zustand versetzt werden, wenn der jeweilige erfasste Phasenstrom an dem zugeordneten Phasenanschluss (5a, 5b, 5c) einen Nulldurchgang oder eine von dem Wechselrichter (3) in die elektrische Maschine (5) hineinlaufende Stromrichtung aufweist, **dadurch gekennzeichnet,**
**dass** das Verfahren weiterhin den Schritt des Erfassens (41) einer gleichspannungsseitigen Eingangsspannung (U_{E}) des Wechselrichters (3) umfasst, dass das Erzeugen (43) des Freilauftriggersignals erfolgt, wenn die erfasste gleichspannungsseitige Eingangsspannung (U_{E}) geringer als ein einstellbarer Freilaufschwellwert (U_{M}; U_{F}) ist, und
**dass** das Schalten (44) des Wechselrichters (3) von dem Kurzschlusszustand in den Freilaufmodus in Abhängigkeit von der erfassten gleichspannungsseitigen Eingangsspannung (U_{E}) erfolgt.

9. Verfahren (40) nach Anspruch 8, weiterhin mit den Schritten:
Erfassen der Ausgangsspannungen des Wechselrichters (3) an den Phasenanschlüssen (5a, 5b, 5c) des Wechselrichters (3); und
Ermitteln der Drehzahl (n) der elektrischen Maschine (5) auf der Basis der erfassten Ausgangsspannungen,
wobei der einstellbare Freilaufschwellwert (U_{M}; U_{F}) einen ersten Spannungsschwellwert (U_{M}) aufweist, wenn die ermittelte Drehzahl (n) unter einem einstellbaren Drehzahlschwellwert (n_{M}) liegt, und einen zweiten Spannungsschwellwert (U_{F}) aufweist, der kleiner als der erste Spannungsschwellwert (U_{M}) ist, wenn die ermittelte Drehzahl (n) über dem einstellbaren Drehzahlschwellwert (n_{M}) liegt.

10. Verfahren (40) nach einem der Ansprüche 8 und 9, weiterhin mit dem Schritt: Halten des Wechselrichters (3) in einem Kurzschlusszustand, solange die erfasste gleichspannungsseitige Eingangsspannung (U_{E}) größer als der einstellbare Freilaufschwellwert (U_{M}; U_{F}) ist.

## Claims

1. Operating state circuit (6) for controlling an inverter (3) including half bridges (4a, 4b, 4c), each having switching devices (3a;...; 3f), which supplies an n-phase electric machine (5) with an n-phase supply voltage via phase connections (5a, 5b, 5c) associated with the respective half bridges (4a, 4b, 4c), where n ≥ 1, including:
an evaluation device (8) which is connected to the phase connections (5a, 5b, 5c) of the inverter (3), and which is designed to detect phase currents at the phase connections (5a, 5b, 5c) of the inverter (3); and
a control device (7) which is coupled to the evaluation device (8) and which is designed to switch the inverter (3) from a short-circuit state to a freewheeling mode, wherein the evaluation device (8) is designed to generate a freewheeling trigger signal and to output it to the control device (7), and
wherein the control device (7) is designed to transfer the respective switching devices (3a; ...; 3f) of the half bridges (4a, 4b, 4c) to an open state after receiving the freewheeling trigger signal only if the respective detected phase current at the associated phase connection (5a, 5b, 5c) has a zero crossing or a current direction running from the inverter (3) into the electric machine (5),
**characterized**
**in that** the evaluation device (8) is connected to DC-voltage-side input terminals (2c, 2d) of the inverter (3),
**in that** the evaluation device (8) is designed to detect a DC-voltage-side input voltage (U_{E}) of the inverter (3) at the DC-voltage-side input terminals (2c, 2d) of the inverter (3),
**in that** the control device (7) is designed to switch the inverter (3) from the short-circuit state to the freewheeling mode as a function of the detected DC-voltage-side input voltage (U_{E}), and
**in that** the evaluation device (8) is designed to generate the freewheeling trigger signal and output it to the control device (7) if the detected DC-voltage-side input voltage (U_{E}) is less than an adjustable freewheeling threshold value (U_{M}; U_{F}).

2. Operating state circuit (6) according to Claim 1, wherein the evaluation device (8) is designed to detect output voltages of the inverter (3) at the phase connections (5a, 5b, 5c) and in particular to ascertain a rotational speed (n) of the electric machine (5) based on the detected output voltages, and
wherein the adjustable freewheeling threshold value (U_{M}; U_{F}) has a first voltage threshold value (U_{M}) if the ascertained rotational speed (n) is below an adjustable rotational speed threshold value (n_{M}), and has a second voltage threshold value (U_{F}) which is less than the first voltage threshold value (U_{M}) if the ascertained rotational speed (n) is above the adjustable rotational speed threshold value (n_{M}).

3. Operating state circuit (6) according to one of Claims 1 and 2, wherein the control device (7) includes a hardware circuit (7b) which is designed to keep the inverter (3) in a short-circuit state as long as the detected DC-voltage-side input voltage (U_{E}) is greater than an adjustable short-circuit threshold value.

4. Operating state circuit (6) according to Claim 2 and 3, wherein the adjustable short-circuit threshold value corresponds to the adjustable freewheeling threshold value (U_{M}) if the ascertained rotational speed (n) is below the adjustable rotational speed threshold value (n_{M}), and wherein the adjustable short-circuit threshold value is greater than the adjustable freewheeling threshold value (U_{F}) if the ascertained rotational speed (n) is above the adjustable rotational speed threshold value (n_{M}).

5. Electric drive system (10), including:
a DC voltage intermediate circuit (2), which is designed to be supplied with a DC voltage by a high-voltage source (1);
an inverter (3) including half bridges (4a, 4b, 4c), each having switching devices (3a; ...; 3f), which is connected to the DC voltage intermediate circuit (2) and which is designed to provide an n-phase supply voltage for an n-phase electric machine (5) at n phase connections (5a, 5b, 5c), where n ≥ 1; and
an operating state circuit (6) according to one of Claims 1 to 4, which is designed to control the plurality of switching devices (3a; ...; 3f) of the inverter (3) for setting a freewheeling state or an active short circuit.

6. Electric drive system (10) according to Claim 5, furthermore including:
an n-phase electric machine (5) whose power terminals are coupled to the phase connections (5a, 5b, 5c) of the inverter (3).

7. Electric drive system (10) according to one of Claims 5 and 6, wherein DC voltage intermediate circuit (2) is coupled to the operating state circuit (6) and is designed to supply the operating state circuit (6) with electric energy.

8. Method (40) for setting operating states of an inverter (3) which includes half bridges (4a, 4b, 4c) having respective switching devices (3a; ...; 3f) and which supplies an n-phase electric machine (5) with an n-phase supply voltage via phase connections (5a, 5b, 5c) associated with the respective half bridges (4a, 4b, 4c), where n ≥ 1, including the steps of:
detecting (42) phase currents at the phase connections (5a, 5b, 5c) of the inverter (3);
generating (43) a freewheeling trigger signal; and
switching (44) the inverter (3) from a short-circuit state to a freewheeling mode,
wherein after receiving the freewheeling trigger signal, the respective switching devices (3a; ...; 3f) of the half bridges (4a, 4b, 4c) are transferred to an open state only if the respective detected phase current at the associated phase connection (5a, 5b, 5c) has a zero crossing or a current direction running from the inverter (3) into the electric machine (5),
**characterized**
**in that** the method furthermore comprises the step of detecting (41) a DC-voltage-side input voltage (U_{E}) of the inverter (3),
**in that** the generation (43) of the freewheeling trigger signal is performed if the detected DC-voltage-side input voltage (U_{E}) is less than an adjustable freewheeling threshold value (U_{M}; U_{F}), and
**in that** the switching (44) of the inverter (3) from the short-circuit state to the freewheeling mode is performed as a function of the detected DC-voltage-side input voltage (U_{E}).

9. Method (40) according to Claim 8, furthermore including the steps of:
detecting the output voltages of the inverter (3) at the phase connections (5a, 5b, 5c) of the inverter (3); and
ascertaining the rotational speed (n) of the electric machine (5) based on the detected output voltages,
wherein the adjustable freewheeling threshold value (U_{M}; U_{F}) has a first voltage threshold value (U_{M}) if the ascertained rotational speed (n) is below an adjustable rotational speed threshold value (n_{M}), and has a second voltage threshold value (U_{F}) which is less than the first voltage threshold value (U_{M}) if the ascertained rotational speed (n) is above the adjustable rotational speed threshold value (n_{M}).

10. Method (40) according to one of Claims 8 and 9, furthermore having the step of keeping the inverter (3) in a short-circuit state as long as the detected DC-voltage-side input voltage (U_{E}) is greater than the adjustable freewheeling threshold value (U_{M}; U_{F}).

## Revendications

1. Circuit de commutation d'état opérationnel (6) destiné à attaquer un onduleur (3) comprenant des demi-ponts (4a, 4b, 4c) qui possèdent des dispositifs de commutation (3a ; ... ; 3f) respectifs, lequel alimente une machine électrique (5) à n phases avec une tension d'alimentation à n phases par le biais de bornes de phase (5a, 5b, 5c) associées aux demi-ponts (4a, 4b, 4c) respectifs, avec n ≥ 1, comprenant :
un dispositif d'interprétation (8) qui est relié aux bornes de phase (5a, 5b, 5c) de l'onduleur (3) et qui est conçu pour détecter des courants de phase au niveau des bornes de phase (5a, 5b, 5c) de l'onduleur (3) ; et
un dispositif d'attaque (7) qui est connecté au dispositif d'interprétation (8) et qui est conçu pour commuter l'onduleur (3) d'un état de court-circuit dans un état de roue libre,
le dispositif d'interprétation (8) étant conçu pour générer un signal de déclenchement de roue libre et le délivrer au dispositif d'attaque (7) et
le dispositif d'attaque (7) étant conçu pour n'amener les dispositifs de commutation (3a ; ... ; 3f) respectifs des demi-ponts (4a, 4b, 4c) dans un état ouvert après la réception du signal de déclenchement de roue libre que lorsque le courant de phase respectif détecté au niveau de la borne de phase (5a, 5b, 5c) associée présente un passage par zéro ou un sens du courant qui entre dans la machine électrique (5) depuis l'onduleur (3), **caractérisé en ce**
**que** le dispositif d'interprétation (8) est relié à des bornes d'entrée (2c, 2d) côté tension continue de l'onduleur (3),
**que** le dispositif d'interprétation (8) est conçu pour détecter une tension d'entrée (U_{E}) côté tension continue de l'onduleur (3) au niveau des bornes d'entrée (2c, 2d) côté tension continue de l'onduleur (3),
**que** le dispositif d'attaque (7) est conçu pour commuter l'onduleur (3) de l'état de court-circuit dans l'état de roue libre en fonction de la tension d'entrée (U_{E}) côté tension continue détectée et
**que** le dispositif d'interprétation (8) est conçu pour générer le signal de déclenchement de roue libre et le délivrer au dispositif d'attaque (7) lorsque la tension d'entrée (U_{E}) côté tension continue détectée est inférieure à une valeur de seuil de roue libre (U_{M} ; U_{F}) réglable.

2. Circuit de commutation d'état opérationnel (6) selon la revendication 1, le dispositif d'interprétation (8) étant conçu pour détecter les tensions de sortie de l'onduleur (3) au niveau des bornes de phase (5a, 5b, 5c) et notamment identifier une vitesse de rotation (n) de la machine électrique (5) sur la base des tensions de sortie détectées et
la valeur de seuil de roue libre (U_{M} ; U_{F}) réglable possède une première valeur de seuil de tension (U_{M}) lorsque la vitesse de rotation (n) identifiée est inférieure à une valeur de seuil de vitesse de rotation (n_{M}) réglable et possède une deuxième valeur de seuil de tension (U_{F}), qui est inférieure à la première valeur de seuil de tension (U_{M}), lorsque la vitesse de rotation (n) identifiée est supérieure à la valeur de seuil de vitesse de rotation (n_{M}) réglable.

3. Circuit de commutation d'état opérationnel (6) selon l'une des revendications 1 et 2, le dispositif d'attaque (7) possédant un circuit matériel (7b) qui est conçu pour maintenir l'onduleur (3) dans un état de court-circuit tant que la tension d'entrée (U_{E}) côté tension continue détectée est supérieure à une valeur de seuil de court-circuit réglable.

4. Circuit de commutation d'état opérationnel (6) selon les revendications 2 et 3, la valeur de seuil de court-circuit réglable correspondant à la valeur de seuil de roue libre (U_{M}) réglable lorsque la vitesse de rotation (n) identifiée est inférieure à la valeur de seuil de vitesse de rotation (n_{M}) réglable et la valeur de seuil de court-circuit réglable étant supérieure à la valeur de seuil de roue libre (U_{F}) réglable lorsque la vitesse de rotation (n) identifiée est supérieure à la valeur de seuil de vitesse de rotation (n_{M}) réglable.

5. Système d'entraînement électrique (10) comprenant :
un circuit intermédiaire de tension continue (2) qui est conçu pour être alimenté avec une tension continue par une source de haute tension (1) ;
un onduleur (3) comprenant des demi-ponts (4a, 4b, 4c) qui possèdent des dispositifs de commutation (3a ; ... ; 3f) respectifs, lequel est relié au circuit intermédiaire de tension continue (2) et lequel est conçu pour fournir, sur n bornes de phase (5a, 5b, 5c), une tension d'alimentation à n phases pour une machine électrique (5) à n phases, avec n ≥ 1 ; et
un circuit de commutation d'état opérationnel (6) selon l'une des revendications 1 à 4, lequel est conçu pour attaquer la pluralité de dispositifs de commutation (3a ; ... ; 3f) de l'onduleur (3) en vue d'établir un état de roue libre ou un court-circuit actif.

6. Système d'entraînement électrique (10) selon la revendication 5, comprenant en outre :
une machine électrique (5) à n phases dont les bornes de puissance sont reliées aux bornes de phase (5a, 5b, 5c) de l'onduleur (3).

7. Système d'entraînement électrique (10) selon l'une des revendications 5 et 6, le circuit intermédiaire de tension continue (2) étant connecté au circuit de commutation d'état opérationnel (6) et étant conçu pour alimenter le circuit de commutation d'état opérationnel (6) en énergie électrique.

8. Procédé (40) de réglage des états opérationnels d'un onduleur (3), lequel comprend des demi-ponts (4a, 4b, 4c) qui possèdent des dispositifs de commutation (3a ; ... ; 3f) respectifs et lequel alimente une machine électrique (5) à n phases avec une tension d'alimentation à n phases par le biais de bornes de phase (5a, 5b, 5c) associées aux demi-ponts (4a, 4b, 4c) respectifs, avec n ≥ 1, comprenant les étapes suivantes :
détection (42) de courants de phase au niveau des bornes de phase (5a, 5b, 5c) de l'onduleur (3) ;
génération (43) d'un signal de déclenchement de roue libre ; et
commutation (44) de l'onduleur (3) d'un état de court-circuit dans un état de roue libre,
les dispositifs de commutation (3a ; ... ; 3f) respectifs des demi-ponts (4a, 4b, 4c) n'étant amenés dans un état ouvert après la réception du signal de déclenchement de roue libre que lorsque le courant de phase respectivement détecté au niveau de la borne de phase (5a, 5b, 5c) associée présente un passage par zéro ou un sens du courant qui entre dans la machine électrique (5) depuis l'onduleur (3),
**caractérisé en ce**
**que** le procédé comprend en outre l'étape de détection (41) d'une tension d'entrée (U_{E}) côté tension continue de l'onduleur (3),
**que** la génération (43) du signal de déclenchement de roue libre a lieu lorsque la tension d'entrée (U_{E}) côté tension continue détectée est inférieure à une valeur de seuil de roue libre (U_{M} ; U_{F}) réglable et
**que** la commutation (44) de l'onduleur (3) de l'état de court-circuit à l'état de roue libre s'effectue en fonction de la tension d'entrée (U_{E}) côté tension continue détectée.

9. Procédé (40) selon la revendication 8, comprenant en outre les étapes suivantes :
détection des tensions de sortie de l'onduleur (3) au niveau des bornes de phase (5a, 5b, 5c) de l'onduleur (3) ; et
identification de la vitesse de rotation (n) de la machine électrique (5) sur la base des tensions de sortie détectées,
la valeur de seuil de roue libre (U_{M} ; U_{F}) réglable possédant une première valeur de seuil de tension (U_{M}) lorsque la vitesse de rotation (n) identifiée est inférieure à une valeur de seuil de vitesse de rotation (n_{M}) réglable et possédant une deuxième valeur de seuil de tension (U_{F}), qui est inférieure à la première valeur de seuil de tension (U_{M}), lorsque la vitesse de rotation (n) identifiée est supérieure à la valeur de seuil de vitesse de rotation (n_{M}) réglable.

10. Procédé (40) selon l'une des revendications 8 et 9, comprenant en outre l'étape suivante :
maintien de l'onduleur (3) dans un état de court-circuit tant que la tension d'entrée (U_{E}) côté tension continue détectée est supérieure à la valeur de seuil de roue libre (U_{M} ; U_{F}) réglable.
